# EUROPEAN PATENT APPLICATION

(11) **EP 4 434 601 A1**
(43) Date of publication of application: **25.09.2024**
(21) Application number: 24165165.2
(22) Date of filing: 21.03.2024
(51) Int. Cl.: B01D 27/02, B01D 27/10, B01D 27/14, B01D 35/12, B01D 35/30, B67D 1/00

(54) **LIQUID DISPENSER SYSTEM**

(30) Priority: 22.03.2023 US 202318124872
(71) Applicant: BHRS Group, LLC, Lakewood, NJ 08701 (US)
(72) Inventor: Rubin, Jonathan, Lakewood, NJ 08701 (US)
(74) Representative: Greaves Brewster LLP

(57) **Abstract**

A wall mounted filtering system includes a chassis having an outwardly facing planer surface, a central recess bay and at least one of an upper recess bay and a lower recess bay. The system includes a face plate covering at least a portion of the outwardly facing planer surface and a filter assembly including at least a first stage filter oriented horizontally within the at least one bays and attached to the chassis via a first hinge, the first stage filter being operably coupled to the chassis with the first hinge and second hinge to tilt outward between an initial filter position in which the first stage filter is located within at least one of the upper recess bay and the lower recess bay below the outwardly facing planer surface, and a final filter position in which the first stage filter extends outward from the outwardly facing planer surface.

## Description

### Background of the Invention

The present application relates to liquid dispensers and more particularly bottle filling stations.

Traditional liquid dispensers are becoming preferable to disposable single use containers. Typically, traditional liquid dispensers are either 1) very large and heavy commercial systems which include a base located on the ground or 2) smaller countertop liquid dispensers. Both the larger systems and smaller systems usually take up a significant amount of real estate which is not ideal for most uses. Often, bottleless systems must be placed near a water supply and usually disrupt the flow of the space due to their size. A larger bottled system does not solve this problem as they still need a significant amount of space and, additionally require having the bottle changed out relatively often. Therefore, there exists a need for a liquid dispenser that does not require significant real estate and/or the frequent replacement of bottles.

### Summary of the Invention

A wall mounted filtering system includes a chassis having an outwardly facing planer surface, a central recess bay and at least one of an upper recess bay and a lower recess bay. The wall mounted filtering system includes a face plate covering at least a portion of the outwardly facing planer surface and a filter assembly including at least a first stage filter, the first stage filter oriented horizontally within the at least one of the upper recess bay and the lower recess bay and attached to the chassis via a first hinge, the first stage filter being operably coupled to the chassis with the first hinge and second hinge to tilt outward between an initial filter position in which the first stage filter is located within at least one of the upper recess bay and the lower recess bay below the outwardly facing planer surface, and a final filter position in which the first stage filter extends outward from the outwardly facing planer surface.

A wall mounted filtering system, is provided that includes a chassis having an outwardly facing planer surface and a central recess bay, an upper recess bay and a lower recess bay, the upper recess bay located vertically above the central recess bay, the lower recess bay being located vertically below the central recess bay, the central recess bay, the upper recess bay, and the lower recess bay recessed within the outwardly facing planer surface; a face plate covering at least a portion of the outwardly facing planer surface; a filter assembly including at least a first stage filter and a second stage filter, the first stage filter oriented horizontally within the upper recess bay and attached to the chassis via a first hinge, the second stage filter oriented horizontally within the lower recess bay and attached to the chassis via a second hinge, the first stage filter and the second stage filter being operably coupled to the chassis with the first hinge and second hinge to tilt outward between an initial filter position in which the first stage filter and the second stage filter are located within the upper recess bay and the lower recess bay below the outwardly facing planer surface, and a final filter position in which the first stage filter and the second stage filter extend outward from the outwardly facing planer surface.

In one embodiment, the face plate is removably coupled to the chassis via a magnetic assembly.

In one embodiment, the face plate includes a plurality of corners and the magnetic assembly concentrates a plurality of magnets on the plurality of corners of the face plate.

In one embodiment, the first stage filter includes a first cylindrical cannister and the second stage filter includes a second cylindrical cannister, and wherein the first stage filter and the second stage filter are connected in series.

In one embodiment, the first stage filter is a sediment filter and the second stage filter is a carbon filter.

In one embodiment, the chassis is fabricated as a single unitary construction.

In one embodiment, the chassis is fabricated by injection molding.

In one embodiment, the system includes one or more sensors.

In one embodiment, the one or more sensors includes a container sensor operable to detect when a container is in place within the central recess bay to dispense liquid.

In one embodiment, the one or more sensors includes a filter sensor operable to detect whether the first and second stage filters should be replaced.

In one embodiment, the face plate is removably attached to the chassis.

In one embodiment, the face plate is disposed over the outwardly facing surface and covers the upper recess bay and a lower recess bay, and has an opening therein that provides access to the central recess bay.

In one embodiment, the face plate has a planer construction, and wherein the opening circumferentially surrounds the central recess bay.

In one embodiment, the central recess bay includes a first frame extending outward from the outwardly facing planer surface of the chassis and surrounding the central recess bay, the first frame configured to locate the face plate horizontally and vertically to the chassis.

In one embodiment, the chassis includes a second frame extending outward from the outwardly facing planer surface of the chassis and surrounding an outside perimeter of the face plate.

In one embodiment, the face plate is offset from the outwardly facing planer surface.

In one embodiment, the system includes a box frame for surface mounting the filtering system and wherein the chassis is removably attached to the box frame.

In one embodiment, the box frame comprises a first vertical channel and a second vertical channel laterally opposite the first vertical channel.

Additional aspects of the present invention will be apparent in view of the description which follows.

### Brief Description of the Figures

FIG. 1 is a front view of a liquid dispenser system.
FIG. 2 is a front view of a liquid dispenser system.
FIG. 3 is a front view of two filters.
FIG. 4 is a front view of a liquid dispenser system.
FIG. 5 is a rear view of a liquid dispenser system.
FIG. 6 is a rear view of two filters with a face plate.
FIG. 7 is a perspective view of a filter assembly.
FIG. 8 is a side rear view of a chassis for a liquid dispenser system.
FIG. 9 is a side rear view of a chassis for a liquid dispenser system.
FIG. 10 is a top view of the upper portion of the liquid dispenser system.
FIG. 11 is a top side view of a liquid dispenser system.
FIG. 12 is a front view of a liquid dispenser system.
FIG. 13 is a front view of a liquid dispenser system.
FIG. 14 is a front view of a liquid dispenser system.
FIG. 15 is a front view of a liquid dispenser system.

### Detailed Description of the Invention

The present invention is described in the following examples, which are set forth to aid in the understanding of the invention, and should not be construed to limit in any way the scope of the invention as defined in the claims which follow thereafter.

The present application generally discloses system that are relatively easy to maintain and/or take up little space. These aspects may be accomplished in a variety of ways, as discussed herein,

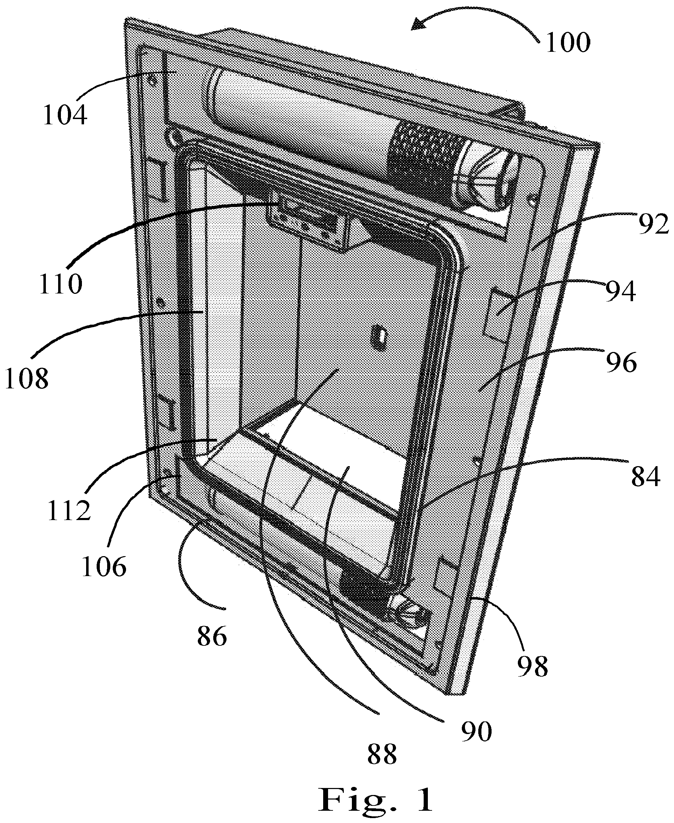

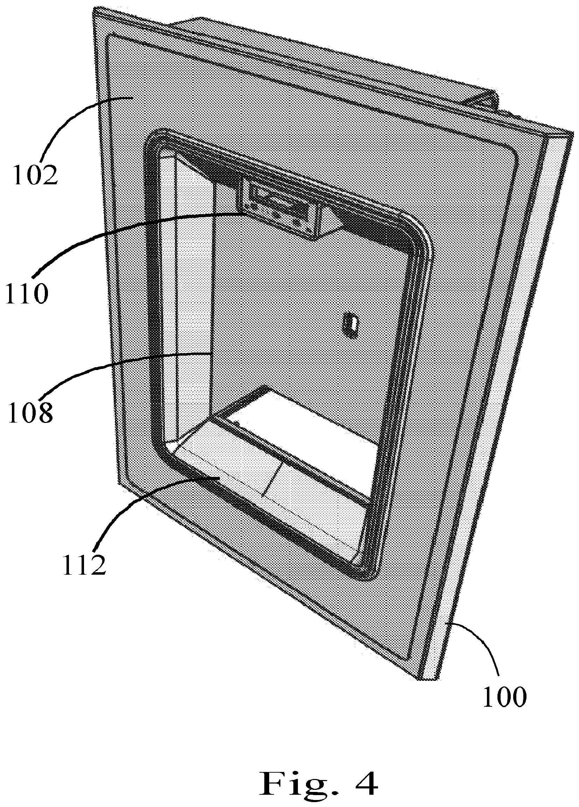

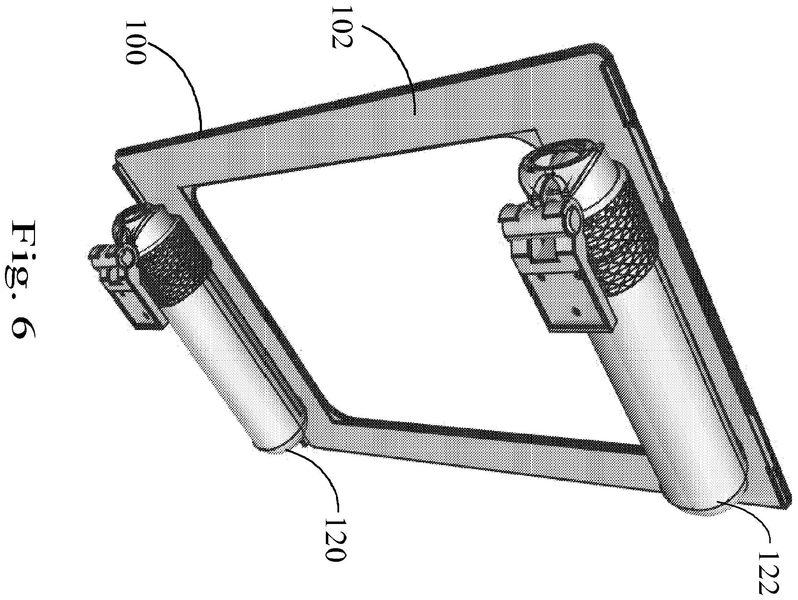

FIG. 1 is a front perspective view of a liquid dispenser system 100 according to some implementations with a face plate (shown in Fig. 4 and 6) removed to expose replaceable filters. In this implementation, the liquid dispenser system 100 preferably includes a chassis 98 to which system components are attached. The chassis 98 is preferably formed as a unit to include the structural elements as shown. The chassis 98 may include \ an upper recess bay 104, a central recess bay 108, a lower recess bay 106, all formed therein, and drip tray 112. In general, the central recess bay 108 may include one or more displays 110 that provide the status of the system. Preferably, one or more spouts are located under the display and/or within the alcove provided by the central recess bay 108 (between the front of the chassis and the rear of the alcove 88. The system includes one or more valves that may be operated to via one or more sensors to dispense liquid to a container, such as a bottle or cup, when the container is placed with the central recess 108 and under the spout. The central recess bay 108 may further include a drip tray 112, which if removable would be affixed to the chassis 98 at the opening 90 in the alcove, where overflow liquid may collect or be drained. In one embodiment, the drip tray 112 may include a drip tray cover which may be removed for cleaning. The drip tray may be outfitted with a built-in drain outlet in operable communication with a drain line.

The system 100 preferably includes an easily removable panel to access the filters within the recess bays 104, 106. The face plate (shown in Figs 4 and 6) preferably has a planer construction that circumferentially surrounds the central recess bay 108. The central recess bay 108 may include frames 84, 92 that extend outward from the outwardly facing planer surface 96 of the chassis 98. The frames 84, 92 locate the panel horizontally and vertically within the chassis 98. The chassis 98 may also include apertures at the bottom lip 86 of the outer frame 92 to accept corresponding tabs in the face plate. The chassis 98 may further include one or more means 94 for removably affixing the face plate to the chassis 98, such as with magnets, locks, etc. Such means may be offset outward from the surface 96 to maintain the face plate a distance away from the surface 96 and therewith maintain a gap between them.

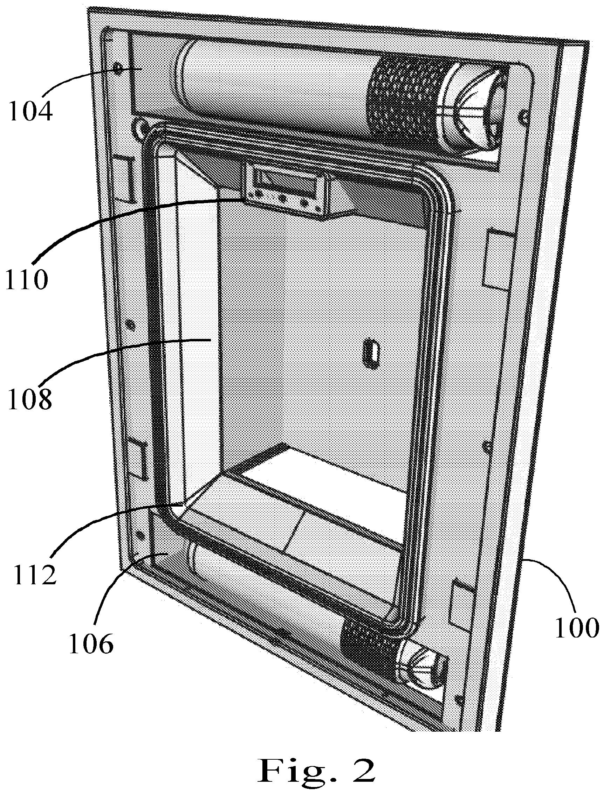

FIG. 2 is another front perspective view of a liquid dispenser system 100, shown from a different perspective.

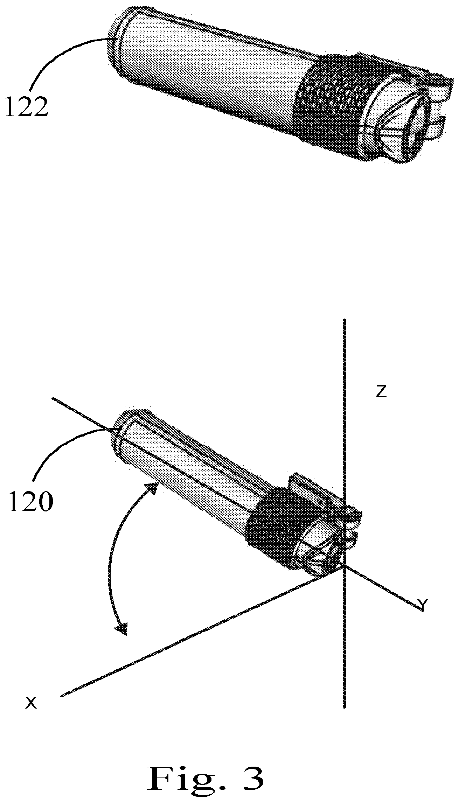

FIG. 3 is a front perspective view showing two filters with the chassis 98 removed. The filters 120, 122 may have a capacity to process 1,500 gallons of liquid and are made to last for at least six months of use. In one embodiment, filter 122 may be a first stage sediment filter. The first stage sediment filter 122 may be operable to eliminate rust or large particles of dirt. Working pressure of the sediment filter may be up to 58 psi or higher. The PH range of sediment filter may include, but is not limited to, 5-10. The hardness of sediment filter may be below 300 ppm and the evaporated remains may be below 500 ppm. In a preferred embodiment, the filter 120, 122 may include a bayonet style connection, such as the connection disclosed in U.S. Publication No. 20210229009, entitled "Water Cooler Filter with Secure Bayonet-Type Connection," which is hereby incorporated by reference herein in its entirety.

Filter 120 may be a second stage filter. The second stage filter 120 may include an activated carbon block filter operable to eliminate chlorine, lead, rust, bacteria, or any harmful or unwanted minerals from the liquid. In one embodiment, the activated carbon filter may be operable to eliminate taste and odor, nominal particulates class I and cysts. The flow rate of activated carbon block filter may be 0.5 gallons per minute or higher. In one embodiment, the working pressure of filter 120 may be 125 PSI or higher. As can be seen, the two filters extend horizontally (y axis) and are essentially parallel to each other. Preferably, the filters tilt outward about the vertical axis (z axis) between a first position fully inserted in the respective recess and a second position where the distal end of the filter is extended outward from the respective recess toward the axis orthogonal to the y axis, which is essentially parallel to the outwardly facing surface 96. This beneficially allows the person replacing filter to more easily grip and twist the filter for replacement while in the extended position.

FIG. 4 is a front perspective view of a liquid dispenser system with the face plate 102 installed. According to one embodiment, the liquid dispenser system 100 may a central recess bay 108 and an opening for a drip tray 112. In general, the central recess bay 108 may include one or more spouts under the display 110, which spouts are functionally connected to one or more valves that may be actuated via sensors, for example, to dispense liquid to a container, such as a bottle or cup. The central recess bay 108 may further include a drip tray connected to the chassis 98 within the opening 112 where overflow liquid may collect or be drained. As can be seen, the face plate 102 is attached to the chassis 98 without any fasteners visible. Preferably, the face plate 102 is attached with an easy release mechanism, such as with magnets, so that the filters may be accessed without the need for any tools. Although embodiments attaching the face plate 102 may be accomplished with magnets, their use is not necessary to achieve the objects of the claimed invention. In addition, embodiments may include attaching the face plate 102 via attachment nubs at the top of the unit and with conventional screws at the bottom of the unit. It will be appreciated by one of ordinary skill in the art that different arrangements of nubs and screws may be implemented in order to securely affix the face plate 102.

As illustrated in FIG. 4, the face plate 102 may be designed to be installed substantially flush with a wall. In general, the liquid dispenser system 100 and corresponding panels and bays may be configured to be wall mountable. When mounted, the dispenser system 100 includes an alcove portion or central recess bay 108 that may be accessed through the face plate 102. The liquid dispenser system 100 may be formed of any suitable material. For example, the liquid dispenser system 100 may be formed from stainless steel, other metallic materials, various polymer, various plastics, as well as other materials.

In one embodiment, the face plate may be operably coupled to the liquid dispenser system by one or more magnets. Therefore, in this particular embodiment, removing the face plate may be accomplished by overcoming the amount of force the engaged magnets present. In one embodiment, the face plate may be magnetically connectable to other components of the liquid dispenser system 100. For example, an edge of the face plate may be magnetically connected to a side edge of a receiving frame. The side edge of a receiving frame may include the side edge of the center bay, and/or a side edge of one or more of the recess bays. The edge of the face plate may be lined on the inside with a plurality of shaped magnets, spaced in a manner to account for efficiency as well as appropriate strength to hold the face plate in place. The edge of the receiving chassis, e.g., the outwardly facing surface, may mirror the outline and spacing of the magnets on the edge of the face plate for secure administration. A variety of magnetic tiles, frames, magnetic connectors, mechanical connectors, may be used in combination to further secure and/or securely remove the face plate to the liquid dispenser system. The face plate 102 may be provided with a space between the face plate 102 and the outer frame for a user to easily pry the face plate 102 from the chassis 98.

In one embodiment, the magnetic poles of the magnets may be arranged in a variety of ways. The plurality of magnets outlining the face plate and receiving panel may include a variety of types, shapes, and sizes. In one configuration, the face plate and receiving panel includes a plurality of square or rectangular shaped magnets, though other shapes also may be included. The magnets or magnetic elements also may be configured to move, adjust, rotate, or spin within the face plate such that their poles can adjust relative to the magnetic poles of nearby or adjacent magnetic elements. In one embodiment, the magnets may have a cylindrical, spherical, or similar shape such that the magnets may rotate, spin, or otherwise adjust their polarity in relation to the nearby magnets to facilitate their attachment to one another. In another configuration, the magnets may not include discrete magnets, but may include another magnetic material, such as magnetic paint.

The outline of magnetic material for the front and receiving panel may not be evenly distributed. In fact, in one embodiment, the certain portions of the outline may include only a few magnets or, alternatively, may include many magnets, and this may depend, in part, on the type, shape, strength, and size of the magnets used. In other configurations, the magnets may be more heavily concentrated near certain portions of the front or receiving panel, such as near the corners.

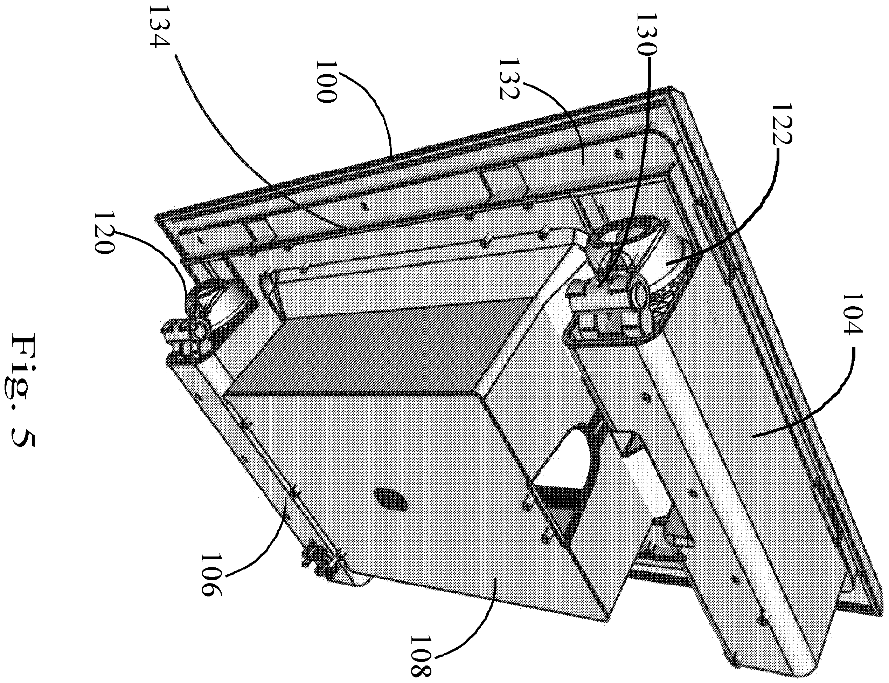

FIG. 5 is a rear perspective view of a liquid dispenser system. FIG. 5 illustrates the liquid dispenser system 100, the central recess bay 108, the upper recess bay 104, the lower recess bay 106, a first filter 120, a second filter 122, and a rear chassis frame 132. The rear chassis frame 132 is preferably a portion of the chassis that runs at opposing ends of the chassis and are located apart from each other so that when the system is installed into a wall, the rear chassis frame 132 is directly outside of the wall studs. Given this spacing, the frame 132 may include a plurality of apertures to affix the system 100 to the wall studs. As can be seen, the chassis may be comprised of the rear panel from which the central recess bay 108, the upper 104, and lower recess bay 106 extend outward toward the rear of the system. The rear panel may also include a flange that locates the chassis 98 vertically within the wall studs.

The rear chassis frame 132 being affixed to the wall studs provides support, bearing at least a portion of the weight for the liquid dispenser system. The rear chassis frame 132 may include opposing channels on either side connected on the top and bottom via flat sections. The central recess bay may be further outlined by rear panel frame 134 indicating a slight depth (less than an inch) before the outline of the rear chassis frame 132. When mounted between wall studs, the liquid dispenser system and filter assembly may be hidden from view between the studs and the face plate.

In one embodiment, the chassis 98 may be fabricated as one unitary chassis. For example, the unitary chassis may be fabricated by the process of injection molding. In this respect, customizable installations can be manufactured depending on the particular target wall and/or dimensions desired. The process of creating a chassis to correspond to a practical need could be automated using a given mold design. Embodiments of the present invention also introduce a way for using a single material or single manufacturing process to manufacture all the components of the custom chassis and where all such components could be customized by direct manipulation of the fabrication (injection molding) process.

In one embodiment, a user may be able to customize and alter various aspects of the printing process, such as the fill pattern and materials, in order to accommodate mechanical variations in the different functional aspects of the chassis. It may also be advantageous to impregnate materials with antimicrobial or odor fighting properties at specific areas of the chassis.

As illustrated in Figure 5, the filter hinge 130 permits the filter 122 to be secured to the upper recess bay 104. In one embodiment, the filter 122 may attached to a hinge 130 via one or more bracket arms. The hinge functions to support the filter on the upper recess bay. In one embodiment, the bracket arms are curved to receive the cylindrical hinge and permit removal of the filter. The filter may be advantageously and securely released from hinge 130 by pulling towards the user, and away from the wall while maintaining the horizontal orientation of filter. It should be noted that filter 120, located in the lower recess bay may be similarly configured. By having the two filters horizontally oriented, efficiency in space and ease of replacement is created.

FIG. 6 is a rear view of two filters with a face plate. The liquid dispenser system 100 is shown with the face plate 102, the first filter 122 and the second filter 120. As may be evident, the face plate 102 operates, in combination with the rear panel chassis, to enclose the first and second filters within the chassis.

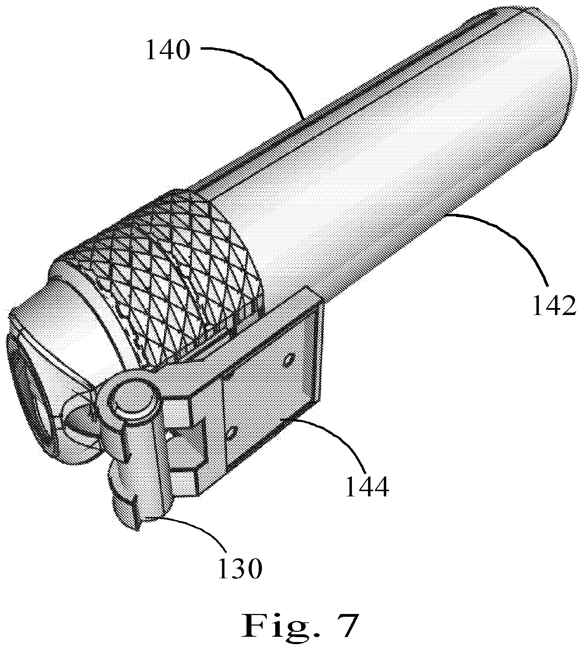

FIG. 7 is a perspective view of a filter assembly 140. FIG. 7 illustrates a cannister 142, a bracket 144 and a hinge 130. The filter assembly 140 includes a hollow, generally cylindrical filter canister 142 designed to retain filter material through which liquid supplied to the liquid dispenser system will pass before being treated and dispensed by the liquid dispenser system. The bracket is provided to support the filter assembly 140 within one of the recess bays. The hinge 130 includes first and second arms curved to accept tubular parts that form the axis about which the filter pivots outward from the chassis. Preferably, the hinge is configured with a passageway having an input for water to pass through the hinge, into the filter connected thereto, and return filtered water through an output in the hinge. The hinges of the two filters may be connected in series so that one of the filters further filters the output of the other filter. In one embodiment, the hinge is configured to stop flow passing through the filter when it is tilted outward of the chassis for filter replacement without having to separately shut water flowing to the system 100.

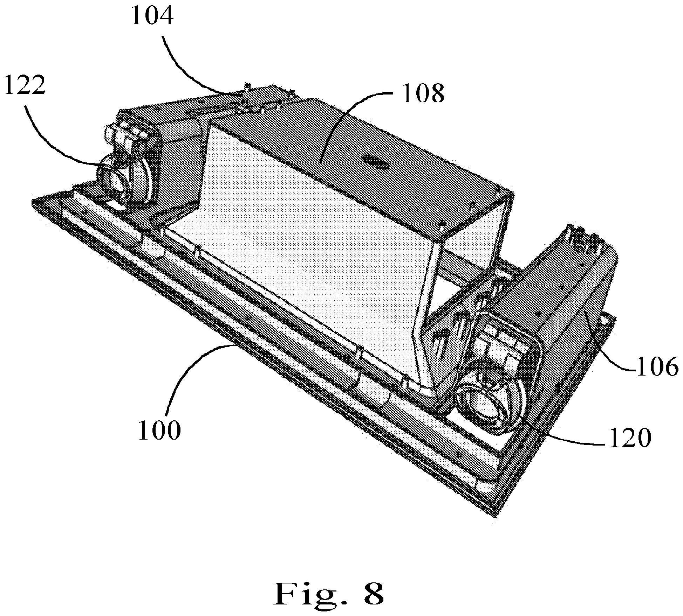

FIG. 8 is a side rear view of a chassis for a liquid dispenser system 100. FIG. 8 illustrates the first filter 122, the second filter 120, the central recess bay 108, the upper recess bay 104 and the lower recess bay 106. In one embodiment, the central recess bay 108 may extend from the front of the liquid dispenser system 100 into the in-wall portion towards the back of the system 100. The central recess bay 108 may be outlined by an upper recess bay and a lower recess bay. The upper and lower recess bays being configured to house the first and second stage filters 120, 122. Further, the central recess bay 108 may be sufficiently deep to comfortably receive a container.

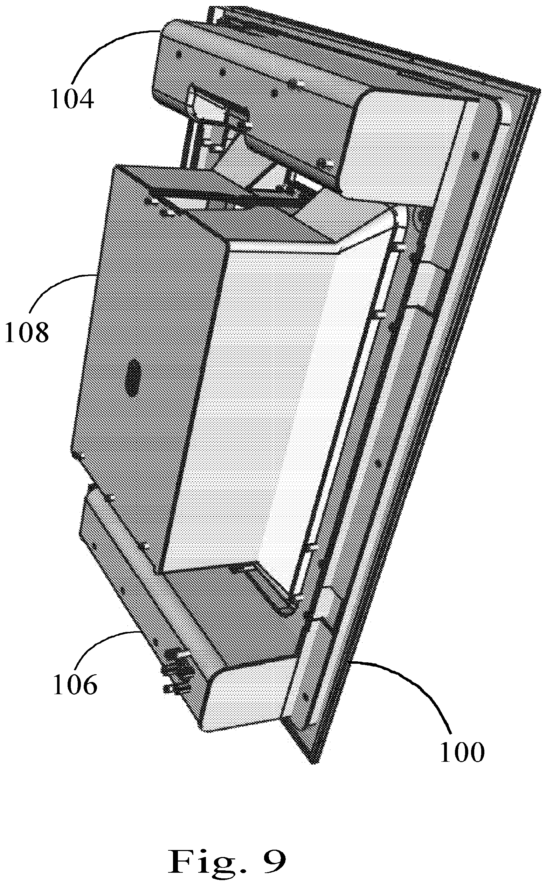

FIG. 9 is a side rear view of a chassis for a liquid dispenser system. FIG. 9 illustrates the liquid dispenser system 100, the central recess bay 108, the upper recess bay 104 and the lower recess bay 106.

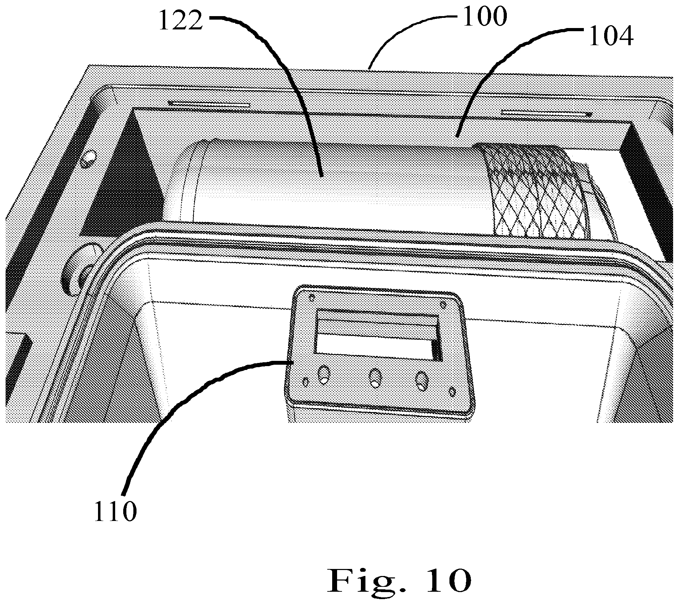

FIG. 10 is a top view of the upper portion of the liquid dispenser system. FIG. 10 illustrates the liquid dispenser system 100, the upper recess bay 104, the first filter 122 and the one or more displays 110.

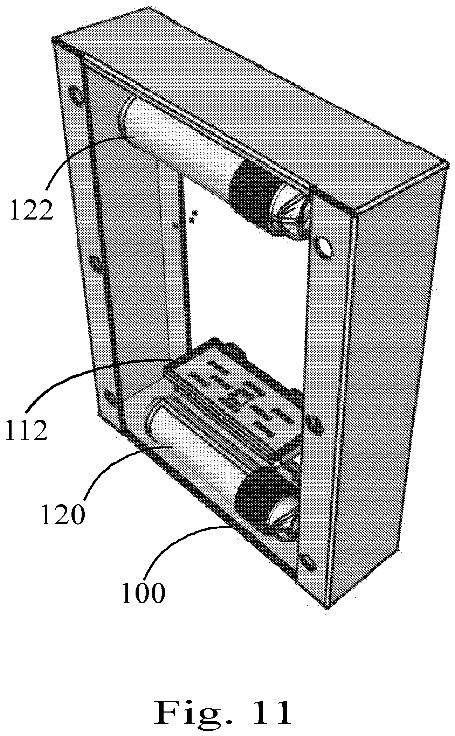

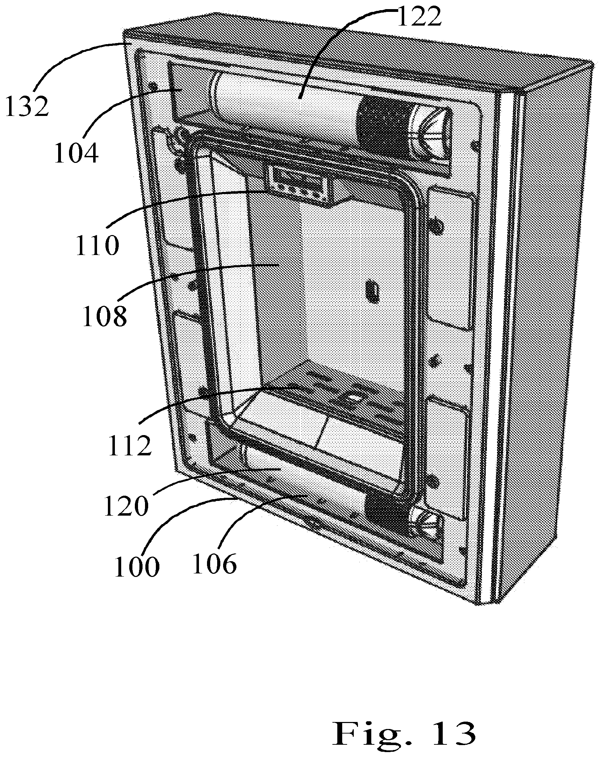

FIG. 11 is a top side view of a liquid dispenser system. FIG. 11 illustrates the liquid dispenser system 100, the first filter 122, the second filter 120 and the drip tray 112, all installed in a box frame. The optional box frame allows the chassis to be installed on the outside of a wall, as opposed to the flush mount of the previous embodiments. In this embodiment, the chassis 98 fits within a box frame, as shown in Fig. 13. The box frame may include a first vertical channel and a second vertical channel laterally opposite the first vertical channel, as shown.

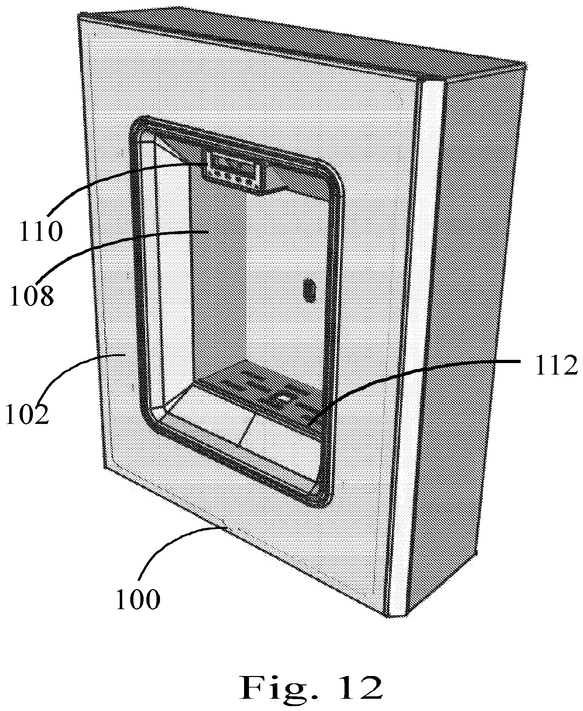

FIG. 12 is a front view of a liquid dispenser system. FIG. 12 illustrates the liquid dispenser system 100, the face plate 102, the central recess bay 108, the one or more displays 110 and the drip tray 112.

FIG. 13 is a front view of a liquid dispenser system. FIG. 13 illustrates the liquid dispenser system 100 including a rear panel chassis 132, an upper recess bay 104, a first filter 122, a central recess bay 108, a lower recess bay 106, a second filter 120 and a drip tray 112, installed within the box frame. In general, the central recess bay 108 may include one or more displays 110 including one or more valves that may be operated to dispense liquid to a container, such as a bottle or cup. The central recess bay 108 may further include a drip tray 112 where overflow liquid may collect or be drained.

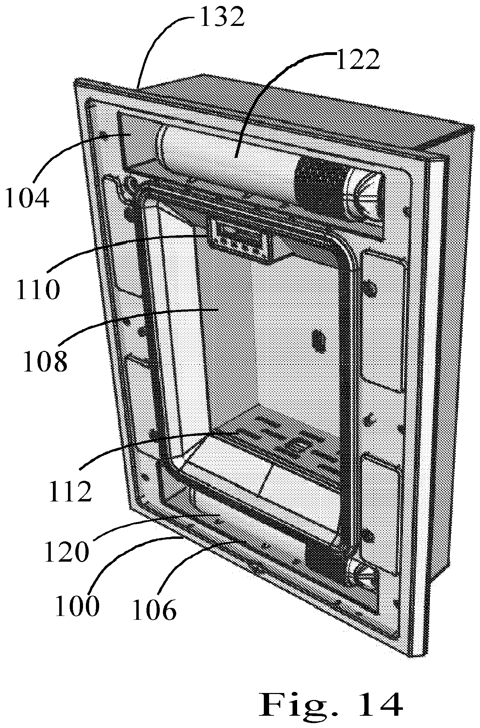

FIG. 14 is a front view of a liquid dispenser system. FIG. 14 illustrates the liquid dispenser system 100 including a rear chassis 132, an upper recess bay 104, a first filter 122, a central recess bay 108, a lower recess bay 106, a second filter 120 and a drip tray 112. In general, the central recess bay 108 may include one or more displays 110 including one or more valves that may be operated to dispense liquid to a container, such as a bottle or cup. The central recess bay 108 may further include a drip tray 112 where overflow liquid may collect or be drained.

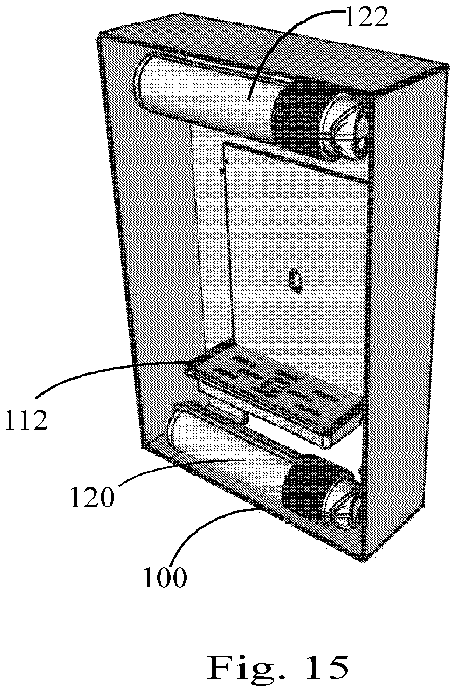

FIG. 15 is a front view of a liquid dispenser system. FIG. 15 illustrates a liquid dispenser system 100 including a drip tray 112, a first filter 122 and a second filter 120, installed within an intermediate box. That is, in this embodiment, the chassis is installed on the intermediate box, and the intermediate box installed on the box frame.

While the foregoing invention has been described in some detail for purposes of clarity and understanding, it will be appreciated by one skilled in the art, from a reading of the disclosure, that various changes in form and detail can be made without departing from the true scope of the invention.

The following clauses define particular aspects and embodiments of the invention.
Clause 1. A wall mounted filtering system, comprising:
   a chassis having an outwardly facing planer surface and a central recess bay, at least one of an upper recess bay and a lower recess bay;
   a face plate covering at least a portion of the outwardly facing planer surface;
   a filter assembly including at least a first stage filter, the first stage filter oriented horizontally within the at least one of the upper recess bay and the lower recess bay and attached to the chassis via a first hinge, the first stage filter being operably coupled to the chassis with the first hinge and second hinge to tilt outward between an initial filter position in which the first stage filter is located within at least one of the upper recess bay and the lower recess bay below the outwardly facing planer surface, and a final filter position in which the first stage filter extends outward from the outwardly facing planer surface.
Clause 2. The wall mounted filtering system of Clause 1, wherein face plate is removably coupled to the chassis via a magnetic assembly.
Clause 3. The wall mounted filtering system of Clause 2, wherein the face plate includes a plurality of corners and the magnetic assembly concentrates a plurality of magnets on the plurality of corners of the face plate.
Clause 4. The wall mounted filtering system of Clause 1, the first stage filter includes a first cylindrical cannister and the second stage filter includes a second cylindrical cannister, and wherein the first stage filter and the second stage filter are connected in series.
Clause 5. The wall mounted filtering system of Clause 1, the first stage filter is a sediment filter and the second stage filter is a carbon filter.
Clause 6. The wall mounted filtering system of Clause 1, the chassis is fabricated as a single unitary construction.
Clause 7. The wall mounted filtering system of Clause 6, the chassis is fabricated via injection molding.
Clause 8. The wall mounted filtering system of Clause 1, further comprising one or more sensors.
Clause 9. The wall mounted filtering system of Clause 8, the one or more sensors includes a container sensor operable to detect when a container is in place within the central recess bay to dispense liquid.
Clause 10. The wall mounted filtering system of Clause 8, the one or more sensors includes a filter sensor operable to detect whether the first and second stage filters should be replaced.
Clause 11. The wall mounted filtering system of Clause 1, wherein the face plate is removably attached to the chassis.
Clause 12. The wall mounted filtering system of Clause 11, wherein the face plate is disposed over the outwardly facing surface and covers the upper recess bay and a lower recess bay, and has an opening therein that provides access to the central recess bay.
Clause 13. The wall mounted filtering system of Clause 12, wherein the face plate has a planer construction, and wherein the opening circumferentially surrounds the central recess bay.
Clause 14. The wall mounted filtering system of Clause 12, wherein the central recess bay includes a first frame extending outward from the outwardly facing planer surface of the chassis and surrounding the central recess bay, the first frame configured to locate the face plate horizontally and vertically to the chassis.
Clause 15. The wall mounted filtering system of Clause 14, wherein the chassis includes a second frame extending outward from the outwardly facing planer surface of the chassis and surrounding an outside perimeter of the face plate.
Clause 16. The wall mounted filtering system of Clause 15, wherein the face plate is offset from the outwardly facing planer surface.
Clause 17. The wall mounted filtering system of Clause 15, comprising a box frame for surface mounting the filtering system and wherein the chassis is removably attached to the box frame.
Clause 18. The wall mounted filtering system of Clause 15, wherein the box frame comprises a first vertical channel and a second vertical channel laterally opposite the first vertical channel.
Clause 19. A wall mounted filtering system, comprising:
   a chassis having an outwardly facing planer surface and a central recess bay, an upper recess bay and a lower recess bay, the upper recess bay located vertically above the central recess bay, the lower recess bay being located vertically below the central recess bay, the central recess bay, the upper recess bay, and the lower recess bay recessed within the outwardly facing planer surface;
   a face plate covering at least a portion of the outwardly facing planer surface;
   a filter assembly including at least a first stage filter and a second stage filter, the first stage filter oriented horizontally within the upper recess bay and attached to the chassis via a first hinge, the second stage filter oriented horizontally within the lower recess bay and attached to the chassis via a second hinge, the first stage filter and the second stage filter being operably coupled to the chassis with the first hinge and second hinge to tilt outward between an initial filter position in which the first stage filter and the second stage filter are located within the upper recess bay and the lower recess bay below the outwardly facing planer surface, and a final filter position in which the first stage filter and the second stage filter extend outward from the outwardly facing planer surface.

## Claims

1. A wall mounted filtering system, comprising:
a chassis having an outwardly facing planer surface and a central recess bay, at least one of an upper recess bay and a lower recess bay;
a face plate covering at least a portion of the outwardly facing planer surface;
a filter assembly including at least a first stage filter, the first stage filter oriented horizontally within the at least one of the upper recess bay and the lower recess bay and attached to the chassis via a first hinge, the first stage filter being operably coupled to the chassis with the first hinge and second hinge to tilt outward between an initial filter position in which the first stage filter is located within at least one of the upper recess bay and the lower recess bay below the outwardly facing planer surface, and a final filter position in which the first stage filter extends outward from the outwardly facing planer surface.

2. The wall mounted filtering system of Claim 1, wherein face plate is removably coupled to the chassis via a magnetic assembly.

3. The wall mounted filtering system of Claim 2, wherein the face plate includes a plurality of corners and the magnetic assembly concentrates a plurality of magnets on the plurality of corners of the face plate.

4. The wall mounted filtering system of Claim 1, the first stage filter includes a first cylindrical cannister and the second stage filter includes a second cylindrical cannister, and wherein the first stage filter and the second stage filter are connected in series.

5. The wall mounted filtering system of Claim 1, the first stage filter is a sediment filter and the second stage filter is a carbon filter.

6. The wall mounted filtering system of Claim 1, the chassis is fabricated as a single unitary construction.

7. The wall mounted filtering system of Claim 6, the chassis is fabricated via injection molding.

8. The wall mounted filtering system of Claim 1, further comprising one or more sensors.

9. The wall mounted filtering system of Claim 8, the one or more sensors includes a container sensor operable to detect when a container is in place within the central recess bay to dispense liquid.

10. The wall mounted filtering system of Claim 8, the one or more sensors includes a filter sensor operable to detect whether the first and second stage filters should be replaced.

11. The wall mounted filtering system of Claim 1, wherein the face plate is removably attached to the chassis.

12. The wall mounted filtering system of Claim 11, wherein the face plate is disposed over the outwardly facing surface and covers the upper recess bay and a lower recess bay, and has an opening therein that provides access to the central recess bay.

13. The wall mounted filtering system of Claim 12, wherein the face plate has a planer construction, and wherein the opening circumferentially surrounds the central recess bay.

14. The wall mounted filtering system of Claim 12, wherein the central recess bay includes a first frame extending outward from the outwardly facing planer surface of the chassis and surrounding the central recess bay, the first frame configured to locate the face plate horizontally and vertically to the chassis.

15. The wall mounted filtering system of Claim 14, wherein the chassis includes a second frame extending outward from the outwardly facing planer surface of the chassis and surrounding an outside perimeter of the face plate and wherein the face plate is offset from the outwardly facing planer surface.
